# EUROPÄISCHE PATENTSCHRIFT

(11) **EP 2 016 303 B1**
(45) Veröffentlichungstag und Bekanntmachung des Hinweises auf die Patenterteilung: **20.01.2021**
(21) Anmeldenummer: 07728584.9
(22) Anmeldetag: 27.04.2007
(51) Int. Cl.: F16D 65/18, F16J 15/16

(54) **KOMBINIERTER BREMSSATTEL**
COMBINED BRAKE CALIPER
ÉTRIER DE FREIN COMBINÉ

(30) Priorität: 03.05.2006 DE 102006020797; 13.04.2007 DE 102007017512
(43) Veröffentlichungstag der Anmeldung: 21.01.2009
(73) Patentinhaber: Continental Teves AG & Co. OHG, 60488 Frankfurt am Main (DE)
(72) Erfinder: LANGER, Wolfgang, 60529 Frankfurt/M (DE); OLMS, Hans, 64380 Rossdorf (DE); ADAM, Thorsten, 60431 Frankfurt/M (DE); STRETZ, Frank, 65428 Rüsselsheim (DE)
(86) Internationale Anmeldenummer: PCT/EP2007/054129
(87) Internationale Veröffentlichungsnummer: WO 2007/125086

(56) Entgegenhaltungen:
- EP-A2- 1 167 807
- EP-A2- 1 643 152
- DE-A1- 3 247 052
- DE-A1- 3 802 014
- DE-U1- 8 900 277
- JP-A- H05 133 429
- US-A1- 2003 024 777

## Beschreibung

Die Erfindung betrifft einen kombinierten Bremssattel für eine Scheibenbremse mit einem Sattelgehäuse, in welchem eine Betätigungsvorrichtung mit einem Kolben in einer Bohrung vorgesehen ist. Dieser Kolben ist in der Bohrung entlang einer Bohrungsachse verschiebbar gelagert, wobei jeweils die Möglichkeit einer Bewegung in einer Zuspannrichtung und in einer Rückstellrichtung gegeben ist. Zwischen dem Kolben und der Bohrung ist eine Dichtungsanordnung mit einem Dichtring in einer radialen Nut vorgesehen.

Ein solcher Bremssattel einer Scheibenbremse ist aus der EP 0 403 635 B1 bekannt. Dabei wird ein kombinierter Bremssattel für eine Kraftfahrzeug-Scheibenbremse angeführt, der ein Sattelgehäuse in einer Bohrung umfasst, in der ein Kolben zur Bremsbetätigung verschiebbar angeordnet ist. Für Feststellbremsungen ist im Sattelgehäuse eine Welle drehbar gelagert, wobei die Welle das Sattelgehäuse durchgreift und mit einem Rampenelement einer Rampenanordnung verbunden ist. Zwischen dem Kolben und der Bohrung ist in einer Nut ein Dichtring angeordnet, der verhindern soll, dass ein Druckmittel zur hydraulischen Betätigung der Scheibenbremse entweicht. Es hat sich gezeigt, dass die vorliegende Dichtungsanordnung erhebliche Nachteile für den Komfort und für den Verschleiß von Belägen und Reibringen mit sich bringt, da eine Rückstellung des Kolbens mit dem Bremsbelag nur unzureichend erfolgt, und sich kein ausreichendes Lüftspiel zwischen dem Bremsbelag und der Bremsscheibe einstellen kann. Durch anliegende Bremsbeläge bei unbetätigter Scheibenbremse wird somit ein bremsendes Restmoment erzeugt, das den Kraftstoffverbrauch erhöht, zu Geräuschbildung und zu einer übermäßigen Abnutzung der Bremsbeläge und des Reibrings führt. Die genannten Nachteile sind besonders gravierend, wenn die Bremse mechanisch betätigt wird, da die durch den Dichtring hervorgerufene Rückstellbewegung geringer ist.

Die DE 38 02 014 A1 beschreibt einen vorteilhaft kombiniert betätigbaren Bremssattel einschließlich Verschleissnachstellvorrichtung, wobei neben Vereinfachung eine maximierte Kolbenfläche ermöglicht ist, umfassend mehrere zueinander gegenüberliegend arrangierte Kolben. Der Rückstellung dient eine Kombination aus Knock-Back (Bremsscheibenschlag), und weiterhin ist dem Bremskolben eine Dichtung mit Roll-Back-Wirkung zugeordnet, die in einer Gehäusenut aufgenommen ist, und über einen relativ zur Kolbenbohrungsachse, antiparallel geneigt gerichteten Nutgrund bei rechtwinklig zur Kolbenbohrungsachse arrangierten Nutflanken verfügt.

Die gattungsfremde DE 32 47 052 A1 bezieht sich auf eine ausschließlich hydraulisch betätigbare, Kraftfahrzeugscheibenbremse umfassend eine Bremskolbenaufnahmebohrung für einen verschiebbar gelagerten Bremskolben in einem Bremsgehäuse. Dabei ist der Bremskolben mit Hilfe von einer Ringdichtung in einer Ringnut abgedichtet verschiebbar im Bremsgehäuse angeordnet. Zwecks effektiver Kolbenrückstellung wird vorgeschlagen, dass die Ringnutgestaltung zwei Nutflanken umfasst, die rechtwinklig zur Bremskolbenaufnahmebohrung gerichtet sind, und wobei der zugehörige Nutgrund aus zwei sich schneidenden Flächenabschnitten besteht, die zur Mantelfläche des Kolbens derart geneigt sind, dass ihre Flächen einen Winkel kleiner 180° bilden.

Es ist eine Aufgabe der Erfindung einen kombinierten Bremssattel einer Scheibenbremse mit Betätigungsvorrichtung anzugeben, welcher die Nachtteile des Stands der Technik vermeidet und insbesondere eine wirkungsvolle Rückstellung des Kolbens nach einer Bremsbetätigung erzielt.

Die Aufgabe wird erfindungsgemäß durch Kombination aller Merkmale des Patentanspruchs 1 gelöst. Insbesondere ist eine Nuteinstichtiefe geringer als die radiale Dicke des Dichtrings (18), und ein Nutgrund der Nut ist in Richtung der Bohrungsachse und gegenüber der Bohrungsachse derart antiparallel ausgebildet, so dass in Zuspannrichtung sich der Nutgrund der Bohrungsachse annähert und wobei eine Flanke der Nut zur Anpassung von einem Rückstelleffekt zumindest abschnittsweise als Schräge ausgebildet ist, welche mit einer Bohrungsoberfläche der Bohrung einen Winkel von mehr als 90° einschließt. Bei einer Bremsbetätigung in Zuspannrichtung zieht der Kolben den Dichtring in gewissem Maße mit und bewegt ihn somit in den Bereich der sich verjüngenden Nut. Dabei wird der Dichtring verformt und er baut eine in Radialrichtung wirkende Kraft gegenüber dem Kolben und gegenüber dem Nutgrund auf. Sobald der Kolben nach der Bremsbetätigung nicht mehr beaufschlagt ist, verursacht die Neigung des Nutgrundes im Zusammenspiel mit dem Dichtring eine in Rückstellrichtung wirkende Kraftkomponente, die ähnlich einer Hangabtriebskraft den Dichtring von der zuspannseitigen Flanke der Nut wegbewegt. Der Dichtring nimmt dabei den Kolben mit, wodurch sich dieser zurückstellt, und ein Lüftspiel zwischen der Bremsscheibe und dem Bremsbelag erzeugt wird. Diese beschriebene Dichtungsanordnung ist vorteilhaft sowohl für mechanisch, als auch für hydraulisch betätigte Kolben und Bremssättel, da die Winkel induzierte Rückstellkraft das Lüftverhalten verbessert. Besonders günstig zeigt sich die vorliegende Konzeption jedoch bei einer mechanischen Betätigungsvorrichtung. Denn bei einer hydraulischen Betätigung wird der Dichtring durch einen anliegenden hydraulischen Druck komprimiert und verformt, wodurch eine verformungsbedingte Rückstellkraft erzeugt wird. Da dieses Phänomen bei der mechanischen Betätigung nicht nutzbar ist, zeigt sich hier die erfindungsgemäße Konzeption und die dadurch hervorgerufene Rückstellung als besonders wirkungsvoll.

In einer Ausgestaltung der Erfindung ist der Nutgrund gegenüber der Bohrungsachse mit einem Winkel von 2° bis 10° Grad geneigt. Bei einer derartigen Neigung des Nutgrundes stellt sich der Rückstelleffekt besonders vorteilhaft dar. In diesem Bereich ist je nach Bremssattel eine günstige Neigung auszumachen, bei welcher der Dichtring im Zusammenspiel mit den übrigen Charakteristika der Scheibenbremse, wie Steifigkeit und Aufdehnung des Bremssattels und Kompressibilität der Bremsbeläge, ein vorteilhaftes Lüftspiel hervorruft. Denn hinsichtlich der Größe des Lüftspiels liegt ein Zielkonflikt vor. Sind die Nut, deren Nutgrund und der Dichtring derart ausgebildet, so dass sich eine besonders starke Rückstellkraft einstellt, und somit der Kolben mit Bremsbelag sich mit einem großen Lüftspiel von der Bremsscheibe zurück bewegt, hat dies zur Folge, dass bei einer nächsten Bremsbetätigung dieses Lüftspiel überwunden werden muss bevor eine Bremswirkung hervorgerufen wird. Dies kann zu einer Verlängerung des Bremsweges und zur Verunsicherung des Fahrers führen, da die Bremse nicht direkt und unmittelbar auf einen Bremswunsch reagiert.

In einer weiteren Spezifizierung der Erfindung ist der Nutgrund gegenüber der Bohrungsachse mit einem Winkel von 3° bis 7° Grad geneigt. Des Weiteren haben Versuche ergeben, dass der erfindungsgemäße Effekt besonders vorteilhaft ist, wenn der Winkel im Wesentlichen 3° oder 7° Grad beträgt. Die oben genannten Merkmale gelten für hydraulisch oder mechanisch betätigte Bremssättel, wirken jedoch besonders günstig in kombinierten Bremssätteln mit einer mechanischen und einer hydraulischen Betätigung. Denn dabei überlagern sich verschiedene Rückstelleffekte, die sehr sorgfältig miteinander auszutarieren sind, was bei einem Winkel von 3° bis 7° Grad, und insbesondere bei 3° und 7° Grad überraschender Weise erreicht wurde. Die spezielle Ausführung einer jeweiligen mechanischen, elektrischen hydraulischen Betätigungsvorrichtung ist für die vorliegende Erfindung von keiner Relevanz.

Es ist anzumerken, dass die genannten positiven Effekte sich auch dann einstellen können, wenn statt des kompletten Nutgrundes selbiger nur abschnittsweise geneigt ist. Zudem sind vorteilhafte verschiedene Neigungen unterschiedlicher Abschnitte des Nutgrundes denkbar. Dabei kann auch angedacht werden, einen Abschnitt des Nutgrundes in Zuspannrichtung derart zu neigen, dass er sich der Bohrungsachse annähert, und einen weiteren Abschnitt in Rückstellrichtung ebenfalls der Bohrungsachse anzunähern. Dies könnte zu einer günstigen Mittelstellung des Dichtrings und somit des Lüftspiels führen.

Erfindungsgemäß ist eine Flanke der Nut zumindest abschnittsweise als Schräge ausgebildet, wobei die Schräge mit einer Bohrungsoberfläche der Bohrung einen Winkel von mehr als 90° Grad einschließt. Diese Maßnahme dient dazu, den durch den geneigten Nutgrund verursachten Rückstelleffekt den geometrischen und funktionellen Gegebenheiten des Bremssattels anzupassen.

Eine Schräge an einer rückstellseitigen Flanke wirkt einer übermäßigen Rückstellung des Kolbens, also einem übermäßigen Lüftspiel und den damit einhergehenden Nachteilen entgegen. Eine solche übermäßige Rückstellung - der sogenannte Knock-Back - kann beispielsweise durch einen Bremsscheibenschlag oder durch extreme Lateralkräfte auf die Fahrzeugräder hervorgerufen werden. Tritt ein Knock-Back auf so nimmt der Kolben den Dichtring in eine übermäßige zurückgestellte Position in Rückstellrichtung mit, wobei sich der Dichtring in die von der Schräge gebildete Fase elastisch hineinverformt. Da der Dichtring bestrebt ist einen niedrigen Zustand der Formänderungsenergie anzunehmen, tritt eine Rückverformung ein. Der Dichtring bewegt sich aus der rückstellseitigen Fase heraus und nimmt dabei den Kolben in Zuspannrichtung mit und verringert das übermäßige Lüftspiel. Vorzugsweise schließt die Schräge der rückstellseitigen Flanke mit der Bohrungsoberfläche einen Winkel von 100° bis 120° ein.

Eine Schräge an einer zuspannseitigen Flanke der Nut optimiert das Rückstellverhalten des Dichtrings und des Kolbens. Dabei schließt die zuspannseitige Schräge mit der Bohrungsoberfläche einen Winkel von 93° bis 97° ein. Weiterhin ist möglich an der zuspannseitigen Flanke keine explizite Schräge vorzusehen, sondern anstatt dessen im Übergangsbereich zwischen der zuspannseitigen Flanke und der Bohrungsoberfläche eine einfache Fase, beispielsweise 0,2 mm mal 45° Grad, vorzusehen.

Der Effekt, welcher von einer Schräge an einer zuspann- und/oder rückstellseitigen Flanke erzielbar ist, wird besonders deutlich, wenn eine Einstichtiefe der Schräge mindestens 30 % der Nuteinstichtiefe beträgt. Die Nuteinstichtiefe und die Einstichtiefe der Schräge sind senkrecht auf die Bohrungsachse der Bohrung bezogen.

Im Rahmen einer weiteren Ausgestaltung der Erfindung - und frei mit den genannten Merkmalen kombinierbar - wird angeführt, dass die Nutbreite 0,5 mm größer ist als die Breite des Dichtrings, und sich so ein axiales Nutübermaß zwischen Dichtring und Nut größer als 0,5 mm ergibt. Weiterhin ist das Volumen der Nut größer als das Volumen des Dichtrings, wobei eine Volumendifferenz - das sogenannte freie Volumen - vorzugsweise 10% bis 25% des Volumens der Nut beträgt. Diese Maßnahmen ermöglichen eine optimale Bewegungs- und Verformungsmöglichkeit des Dichtrings in der Nut, wodurch ein optimiertes Lüftspielverhaltens des Bremssattels erreicht wird. Der Dichtring und die Nut sind erfindungsgemäß derart geometrisch aufeinander abgestimmt, dass die Nuteinstichtiefe geringer ist als die radiale Dicke des Dichtrings. Somit wird der Dichtring in montiertem Zustand in die Nut gequetscht, elastisch verformt und vorgespannt. Hinsichtlich der Art der Bremssättel sind verschiedene Ausführungen denkbar, wobei der Bremssattel als fahrzeugfester Festsattel ausgebildet sein kann, oder das Sattelgehäuse axial verschiebbar auf einem fahrzeugfesten Halter gelagert ist, und somit eine Schwimmsattelausführung vorliegt.

Weitere Einzelheiten der Erfindung gehen aus den Zeichnungen anhand der Beschreibung hervor.

In den Zeichnungen zeigt
- Fig. 1: eine Schnittansicht durch einen Bremssattel mit einer Dichtungsanordnung,
- Fig. 2: eine Detailansicht der Dichtungsanordnung gemäß einer ersten Ausführungsform, und
- Fig. 3: eine Detailansicht der Dichtungsanordnung gemäß einer zweiten Ausführungsform.

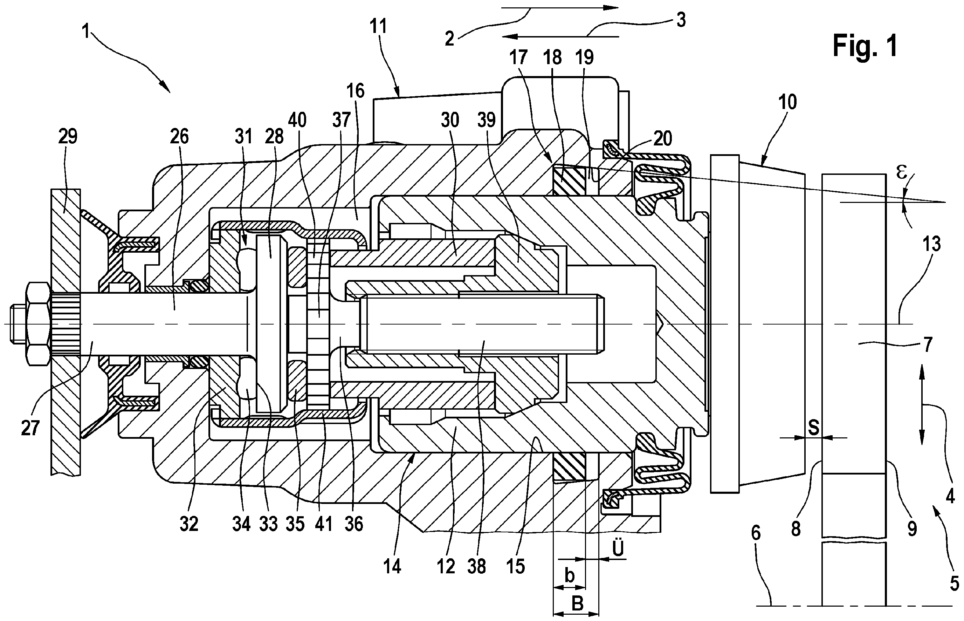

In Fig. 1 ist eine Scheibenbremse mit einem Bremssattel 1, einem Bremsbelag 10, und mit einer Bremsscheibe 5 gezeigt, wobei nur die erfindungsrelevanten Abschnitte dieser Bauteile dargestellt sind. Der Bremssattel 1 umfasst unter anderem ein Sattelgehäuse 11, einen Kolben 12, der zur Bremsbetätigung in einer Bohrung 14 entlang einer Bohrungsachse 13 verschiebbar angeordnet ist. Indem der Kolben 12 in einer Zuspannrichtung 2 bewegt wird, verschiebt er einen Bremsbelag 10 an eine axiale Reibfläche 8 eines Reibrings 7 einer Bremsscheibe 5. Diese ist um eine Drehachse 6 drehbar gelagert. Nicht dargestellt ist eine Gehäusebrücke, welche die Bremsscheibe 5 übergreift, wodurch auch eine andere axiale Reibfläche 9 des Reibrings 7 mittels eines weiteren Bremsbelags beaufschlagbar ist.

Im Falle einer Betriebsbremsung wird der Kolben 12 mittels hydraulischer Druckbeaufschlagung verschoben. Dazu bildet der Kolben 12 mit dem Sattelgehäuse 11 einen Druckraum 16 aus, in welchem ein Druckmittel vorgesehen ist. Zwischen der Bohrung 14 und dem Kolben 12 ist eine Dichtungsanordnung 17 angeordnet, welche den Druckraum 16 gegenüber der Umgebung abdichtet und zur Einstellung eines Lüftspiels S zwischen dem Bremsbelag 10 und der Reibfläche 8 dient. Die Dichtungsanordnung 17 umfasst einen Dichtring 18, der von einer umlaufenden radialen Nut 19 in der Bohrungsoberfläche 15 der Bohrung 14 aufgenommen ist. Der Dichtring 18 weist eine axiale Breite b auf, die vorzugsweise um etwa 0,5 mm geringer ist als die axiale Nutbreite B.

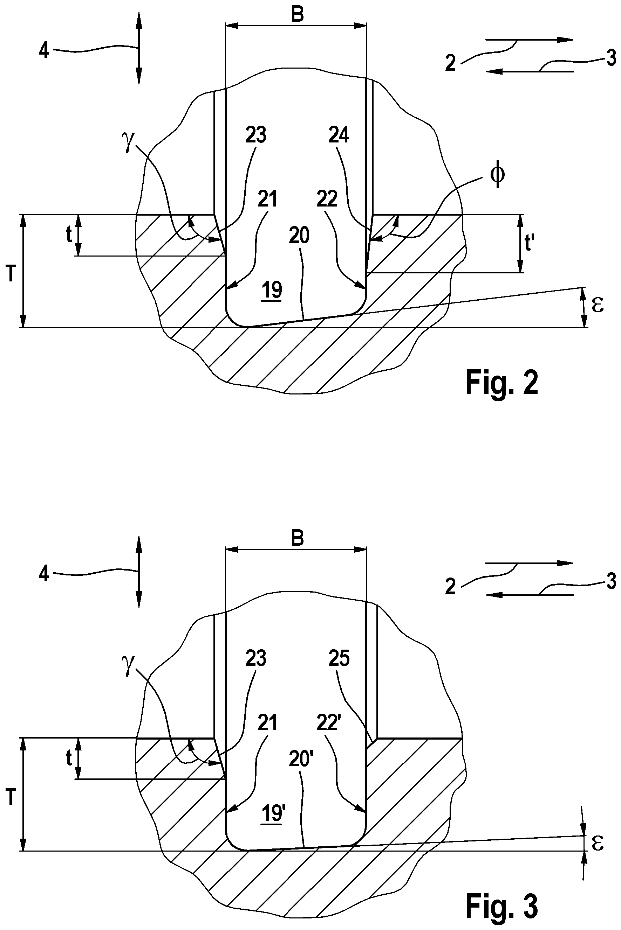

In Fig. 2 und Fig. 3 sind zwei Ausführungsformen der Nut 19,19' der Dichtungsanordnung 17 in jeweils einer Detailansicht angeführt. Auf die Darstellung des Dichtrings 18 und auf eine separate Nummerierung identischer Merkmale wird hierbei verzichtet. Die Nut 19,19' ist in einer Radialrichtung 4 bezogen auf die Bohrung 14 mit einer Nuteinstichtiefe T in das Sattelgehäuse 11 eingebracht, und ist von dem Nutgrund 20,20', der zuspannseitigen Flanke 22 und der rückstellseitigen Flanke 21 begrenzt. In beiden Ausführungen (Fig. 2, Fig. 3) der Nut 19,19' ist der Nutgrund 20,20' mit dem Winkel ε gegenüber der Bohrungsachse 13 geneigt, so dass sich der Nutgrund 20,20' in Zuspannrichtung 2 der Bohrungsachse 13 annähert. Der Winkel ε bezieht sich dabei auf die axiale Projektion des Nutgrundes 20,20' bezüglich der Bohrungsachse 13. Der Winkel ε der ersten Ausführung in Fig. 2 beträgt 7° Grad, wogegen der Winkel ε in Fig. 3 mit 3° Grad gegenüber der Bohrungsachse 13 ausgeprägt ist. Folglich ist der Rückstelleffekt, welchen der Dichtring 18 im Zusammenwirken mit dem Nutgrund 20,20' erzeugt in der ersten Ausführung stärker als in der zweiten. Weiterhin unterscheiden sich die beiden Ausführungen hinsichtlich der zuspannseitigen Flanke 22,22'. An der zuspannseitigen Flanke 22 der ersten Ausführung (Fig. 2) ist eine Schräge 24 vorgesehen, die mit der Bohrungsoberfläche 15 einen Winkel φ von etwa 95° Grad einschließt. Diese Schräge 24, und die dadurch gebildete Fase, verstärkt den Rückstelleffekt des Dichtrings 18 insbesondere bei einer hydraulischen Betätigung, da das rückstellseitig anliegende Druckmittel den Dichtring 18 in das von der Schräge 24 und deren Fase gebildete Volumen elastisch einformt. Auf eine derartige Schräge wird an der zuspannseitigen Flanke 22' in der zweiten Ausführung der Nut 19' verzichtet, wobei an dem Übergang von Flanke 22' und Bohrungsoberfläche 15 eine Standard-Fase 25 von beispielsweise 0,2 mm x 45° Grad angebracht ist. Beide Ausführungen haben gemeinsam, dass an der rückstellseitigen Flanke 21 der Nut 19,19' ebenfalls eine Schräge 23 angebracht ist, die einer übermäßigen Rückstellung des Kolbens 12 entgegenwirkt. Diese Schräge 23 schließt mit der Bohrungsoberfläche 15 einen Winkel γ von etwa 16° Grad ein. Die senkrecht zur Bohrungsachse 13 gemessene Einstichtiefe t der Schräge 23 ist im Verhältnis zur Nuteinstichtiefe T in den vorliegenden Ausführungsbeispielen mit 37 % anzugeben.

Zur Umsetzung einer Feststellbremsung ist eine mechanische Betätigungsvorrichtung mit einer Welle 26 vorgesehen, mittels derer der Kolben 12 innerhalb der Bohrung 14 verschoben werden kann. Die Welle 26 greift mit einem Wellenende 27, an welchem ein Betätigungshebel 29 angebracht ist, durch eine Öffnung des Sattelgehäuses 11. Die mechanische Betätigungsvorrichtung wirkt unter Zwischenschaltung einer längenveränderlichen Nachstellvorrichtung 30 auf den Kolben 12 ein. Die mechanische Betätigungsvorrichtung umfasst eine Rampenanordnung 31, die ein gehäusefestes Rampenelement 32 sowie ein demgegenüber drehbares Rampenelement 33 aufweist. Dabei ist das Rampenelement 33 einstückig auf einem scheibenförmigen Endabschnitt 28 der Welle 26 ausgebildet. Zwischen den Rampenelementen 32,33 sind mehrere Wälzkörper 34 angeordnet, so dass die Rampenanordnung 31 bei gegenseitiger Verdrehung der Rampenelemente 32,33 eine axiale Verschiebung der Welle 26 in Zuspannrichtung 2 bewirkt.

Zwischen dem Endabschnitt 28 der Welle 26 und dem Kolben 12 ist eine längenveränderliche Nachstellvorrichtung 30 vorhanden, die hier nur schematisch gezeigt ist und den Hub der Rampenanordnung 31 auf den Kolben 12 überträgt und einen Verschleiß des Bremsbelags 10 und der Bremsscheibe 5 automatisch ausgleicht. Diese Nachstellvorrichtung 30 umfasst unter anderem eine Spindel 36 mit einem Endabschnitt 37 und eine auf den Schaft 38 der Spindel 37 aufgeschraubte Mutter 39, die am Kolben 12 anliegt. Zwischen der Stirnseite der Spindel 36 und dem Endabschnitt 28 ist ein axiales Lager 35 vorgesehen.

Auf dem Umfang eines Endabschnitts 37 der Spindel 36 sind mehrere regelmäßige Zähne einer Verzahnung 40 angebracht, so dass der Endabschnitt 37 einen sternförmigen Querschnitt aufweist. Um die Spindel 36 gegen Verdrehen zu sichern, umgreift eine gehäusefeste Patrone 41 den Endabschnitt 37. Da die Patrone 41 zumindest teilweise ein, dem Endabschnitt 37 entsprechendes, sternförmiges Innenprofil hat, greift sie in die Verzahnung 40 und bildet mit dem Endabschnitt 37 eine formschlüssige Verbindung in tangentialer Richtung (Fig. 2). Damit ist die Spindel 36 in Betätigungsrichtung verschiebbar, aber gleichzeitig verdrehsicher innerhalb der Patrone 41 und damit auch im Bremssattel 1 aufgenommen.

In Fig. 1 ist der Bremssattel 1 in einem unbetätigten Zustand gezeigt. Bei einer hydraulischen Betätigung wird das Druckniveau im Druckraum 16 erhöht, was den Kolben 12 dazu veranlasst, in Zuspannrichtung 2 auszurücken. Sowohl durch den hydraulischen Druck, als auch durch die Kolbenbewegung wird der Dichtring 18 an die zuspannseitige Flanke 22,22' der Nut 19,19' gepresst, wobei der Dichtring 18 eine Verformung aufgrund der sich verjüngenden Nuteinstichtiefe t erleidet. Nach der Bremsbetätigung rutscht der Dichtring 18 auf dem schrägen Nutgrund 20,20' im Rahmen des Übermaß Ü in Rückstellrichtung 3 zurück und nimmt dadurch den Kolben 12 mit. Durch den sich rückstellenden Kolben 12 stellt sich das Lüftspiel S ein.

Der funktionelle Ablauf der Feststellbremsbetätigung im Bremssattel 1 aus Fig. 1 wird im Folgenden dargelegt. Bei Betätigung der Feststellbremse wird über den Betätigungshebel 29 die Welle 26 und der Endabschnitt 28 gedreht und die Rampenanordnung 31 verdreht. Dadurch bewirken die beiden Rampenelementen 32 und 33 eine axiale Verschiebung der Welle 26 und des Endabschnitts 28. Diese axiale Verschiebung wird mittels des axialen Lagers 35 auf den Endabschnitt 37 der Spindel 36 übertragen. Da die Spindel 36 über die Verzahnung 40 des Endabschnitts 37 drehfest in der Patrone 41 geführt ist, vollzieht die Spindel 36 ausschließlich eine axiale Verschiebung ohne Rotation. Über die auf dem Schaft 38 aufgeschraubte Mutter 39 wird so der Kolben 12 mit Dichtring 18 bewegt, der Bremsbelag 10 verschoben und die Bremsscheibe 5 beaufschlagt. Nach dem Beenden der mechanischen Betätigung bewegt sich der Dichtring 18 in Rückstellrichtung 3 und zieht den Kolben 12 mit.

Im vorliegenden Ausführungsbeispiel ist ein kombinierter Bremssattel angeführt, bei welchem die mechanische Betätigungsvorrichtung zur Feststellbremsung und die hydraulische Betätigungsvorrichtung zur Betriebsbremsung dient. Ausdrücklich sei angemerkt, dass dies keine einschränkende Wirkung habe soll, denn es sind hydraulische, mechanische oder elektrische Betätigungsvorrichtungen jeweils diverser Ausprägung zur Feststell- oder Betriebsbremsung denkbar.

**Bezugszeichenliste**

| | | | |
|---|---|---|---|
| 1 | Bremssattel | 25 | Standard-Fase |
| 2 | Zuspannrichtung | 26 | Welle |
| 3 | Rückstellrichtung | 27 | Wellenende |
| 4 | Radialrichtung | 28 | Endabschnitt |
| 5 | Bremsscheibe | 29 | Betätigungshebel |
| 6 | Drehachse | 30 | Nachstellvorrichtung |
| 7 | Reibring | 31 | Rampenanordnung |
| 8 | Reibfläche | 32 | Rampenelement |
| 9 | Reibfläche | 33 | Rampenelement |
| 10 | Bremsbelag | 34 | Wälzkörper |
| 11 | Sattelgehäuse | 35 | Lager |
| 12 | Kolben | 36 | Spindel |
| 13 | Bohrungsachse | 37 | Endabschnitt |
| 14 | Bohrung | 38 | Schaft |
| 15 | Bohrungsoberfläche | 39 | Mutter |
| 16 | Druckraum | 40 | Verzahnung |
| 17 | Dichtungsanordnung | 41 | Patrone |
| 18 | Dichtring | | |
| 19 | Nut | B | Nutbreite |
| 19' | Nut | b | Breite |
| 20 | Nutgrund | S | Lüftspiel |
| 20' | Nutgrund | T | Nuteinstichtiefe |
| 21 | Flanke | t | Einstichtiefe |
| 22 | Flanke | Ü | Nutübermaß |
| 22' | Flanke | ε | Winkel |
| 23 | Schräge | γ | Winkel |
| 24 | Schräge | φ | Winkel |

## Patentansprüche

1. Kombinierter Bremssattel (1) für eine Scheibenbremse mit einem Sattelgehäuse (11),
in welchem eine mechanische Betätigungsvorrichtung mit einem Kolben (12) in einer Bohrung (14) vorgesehen ist, und der Kolben (12) entlang einer Bohrungsachse (13) in einer Zuspannrichtung (2) und einer Rückstellrichtung (3) verschiebbar gelagert ist,
wobei zwischen dem Kolben (12) und der Bohrung (14) eine Dichtungsanordnung (17) mit einem Dichtring (18) in einer radialen Nut (19,19') vorgesehen ist,
wobei ein Nutgrund (20,20') der Nut (19,19') in Richtung der Bohrungsachse (13) und gegenüber der Bohrungsachse (13) derart antiparallel ausgebildet ist, so dass in Zuspannrichtung (2) sich der Nutgrund (20,20') der Bohrungsachse (13) annähert, **dadurch gekennzeichnet, dass** eine Nuteinstichtiefe geringer ist als die radiale Dicke des Dichtrings (18), und dass
eine Flanke (21,22) der Nut (19,19') zur Anpassung von einem Rückstelleffekt zumindest abschnittsweise als Schräge (23,24) ausgebildet ist, welche mit einer Bohrungsoberfläche (15) der Bohrung (14) einen Winkel (φ,γ) von mehr als 90° Grad einschließt.

2. Kombinierter Bremssattel nach Anspruch 1, **dadurch gekennzeichnet, dass** der Nutgrund (20,20') gegenüber der Bohrungsachse (13) mit einem Winkel (ε) von 2° bis 10° Grad geneigt ist.

3. Kombinierter Bremssattel nach Anspruch 2, **dadurch gekennzeichnet, dass** der Nutgrund (20,20') gegenüber der Bohrungsachse (13) mit einem Winkel (ε) von 3° bis 7° Grad geneigt ist.

4. Kombinierter Bremssattel nach Anspruch 4, **dadurch gekennzeichnet, dass** eine Einstichtiefe (t,t') der Schräge (23,24) mindestens 30 % der Nuteinstichtiefe (T) beträgt.

5. Kombinierter Bremssattel nach Anspruch 1 oder 4, **dadurch gekennzeichnet, dass** die Schräge (24) an einer zuspannseitigen Flanke (22) mit der Bohrungsoberfläche (15) einen Winkel (φ) von 93° bis 97° einschließt.

6. Kombinierter Bremssattel nach Anspruch 1 oder 4, **dadurch gekennzeichnet, dass** die Schräge (23) an einer rückstellseitigen Flanke (21) mit der Bohrungsoberfläche (15) einen Winkel (γ) von 100° bis 120° einschließt.

7. Kombinierter Bremssattel nach einem oder mehreren der voran gestellten Ansprüche, **dadurch gekennzeichnet, dass** ein axiales Nutübermaß (Ü) zwischen dem Dichtring (18) und der Nut (19,19') größer als 0,5 mm ist.

8. Kombinierter Bremssattel nach einem oder mehreren der voran gestellten Ansprüche, **dadurch gekennzeichnet, dass** ein Volumen der Nut (19,19') größer als ein Volumen des Dichtrings (18) ist.

9. Kombinierter Bremssattel nach einem oder mehreren der voran gestellten Ansprüche, **dadurch gekennzeichnet, dass** eine hydraulische Betätigungsvorrichtung und eine mechanische Betätigungsvorrichtung im Sattelgehäuse (11) vorgesehen sind.

## Claims

1. Combined brake calliper (1) for a disc brake, having a calliper housing (11)
in which a mechanical actuating device having a piston (12) in a bore (14) is provided, and the piston (12) is mounted so as to be movable along a bore axis (13) in an application direction (2) and a return direction (3),
wherein a sealing arrangement (17) having a sealing ring (18) in a radial groove (19,19') is provided between the piston (12) and the bore (14),
wherein a groove base (20,20') of the groove (19,19') is formed in the direction of the bore axis (13) and so as to be antiparallel with respect to the bore axis (13) in such a way that the groove base (20,20') approaches the bore axis (13) in the application direction (2), **characterized in that** a groove cut-in depth is smaller than the radial thickness of the sealing ring (18), and **in that** a flank (21,22) of the groove (19,19') is, for adaptation of a return effect, formed at least in sections as a chamfer (23,24) that encloses an angle (φ,γ) of greater than 90° (degrees) with a bore surface (15) of the bore (14).

2. Combined brake calliper according to Claim 1, **characterized in that** the groove base (20,20') is inclined with respect to the bore axis (13) by an angle (ε) of 2° to 10° (degrees).

3. Combined brake calliper according to Claim 2, **characterized in that** the groove base (20,20') is inclined with respect to the bore axis (13) by an angle (ε) of 3° to 7° (degrees) .

4. Combined brake calliper according to Claim 4, **characterized in that** a cut-in depth (t,t') of the chamfer (23,24) is at least 30% of the groove cut-in depth (T) .

5. Combined brake calliper according to Claim 1 or 4, **characterized in that** the chamfer (24) on an application-side flank (22) encloses an angle (φ) of 93° to 97° with the bore surface (15).

6. Combined brake calliper according to Claim 1 or 4, **characterized in that** the chamfer (23) on a return-side flank (21) encloses an angle (γ) of 100° to 120° with the bore surface (15).

7. Combined brake calliper according to one or more of the preceding claims, **characterized in that** an axial groove oversize (Ü) between the sealing ring (18) and the groove (19,19') is greater than 0.5 mm.

8. Combined brake calliper according to one or more of the preceding claims, **characterized in that** a volume of the groove (19,19') is greater than a volume of the sealing ring (18).

9. Combined brake calliper according to one or more of the preceding claims, **characterized in that** a hydraulic actuating device and a mechanical actuating device are provided in the calliper housing (11).

## Revendications

1. Étrier de frein combiné (1) pour un frein à disque comprenant un boîtier d'étrier (11),
dans lequel est prévu un dispositif d'actionnement mécanique avec un piston (12) dans un alésage (14), et le piston (12) étant supporté de manière déplaçable le long d'un axe d'alésage (13) dans une direction de serrage (2) et dans une direction de rappel (3),
entre le piston (12) et l'alésage (14) étant prévu un agencement d'étanchéité (17) avec une bague d'étanchéité (18) dans une rainure radiale (19, 19'),
un fond de rainure (20, 20') de la rainure (19, 19') étant réalisé de manière antiparallèle dans la direction de l'axe d'alésage (13) et par rapport à l'axe d'alésage (13) de telle sorte que dans la direction de serrage (2), le fond de rainure (20, 20') se rapproche de l'axe d'alésage (13),
**caractérisé en ce**
**qu'**une profondeur d'encoche de rainure est inférieure à l'épaisseur radiale de la bague d'étanchéité (18), et en ce
**qu'**un flanc (21, 22) de la rainure (19, 19') est réalisé au moins en partie sous forme de biseau (23, 24) pour l'adaptation d'un effet de rappel, lequel biseau forme avec une surface d'alésage (15) de l'alésage (14) un angle (Φ, γ) supérieur à 90°.

2. Étrier de frein combiné selon la revendication 1, **caractérisé en ce que** le fond de rainure (20, 20') est incliné par rapport à l'axe d'alésage (13) suivant un angle (ε) de 2° à 10°.

3. Étrier de frein combiné selon la revendication 2, **caractérisé en ce que** le fond de rainure (20, 20') est incliné par rapport à l'axe d'alésage (13) suivant un angle (ε) de 3° à 7°.

4. Étrier de frein combiné selon la revendication 4, **caractérisé en ce qu'**une profondeur d'entaille (t, t') du biseau (23, 24) représente au moins 30 % de la profondeur d'entaille (T) de la rainure.

5. Étrier de frein combiné selon la revendication 1 ou 4, **caractérisé en ce que** le biseau (24) au niveau d'un flanc (22) du côté du serrage, forme avec la surface d'alésage (15) un angle (Φ) de 93° à 97°.

6. Étrier de frein combiné selon la revendication 1 ou 4, **caractérisé en ce que** le biseau (23), au niveau d'un flanc (21) du côté du rappel, forme avec la surface d'alésage (15) un angle (γ) de 100° à 120°.

7. Étrier de frein combiné selon l'une quelconque ou plusieurs des revendications précédentes, **caractérisé en ce qu'**un surdimensionnement axial (Ü) de la rainure entre la bague d'étanchéité (18) et la rainure (19, 19') est supérieur à 0,5 mm.

8. Étrier de frein combiné selon l'une quelconque ou plusieurs des revendications précédentes, **caractérisé en ce qu'**un volume de la rainure (19, 19') est supérieur à un volume de la bague d'étanchéité (18).

9. Étrier de frein combiné selon l'une quelconque ou plusieurs des revendications précédentes, **caractérisé en ce qu'**un dispositif d'actionnement hydraulique et un dispositif d'actionnement mécanique sont prévus dans le boîtier d'étrier (11) .
